# EUROPÄISCHE PATENTANMELDUNG

(11) **EP 4 411 152 A1**
(43) Veröffentlichungstag der Anmeldung: **07.08.2024**
(21) Anmeldenummer: 23154583.1
(22) Anmeldetag: 02.02.2023
(51) Int. Cl.: F16B 9/02, F16B 37/08

(54) **BESCHLAG FÜR EINEN BAUTEIL**

(71) Anmelder: Knapp GmbH, 3324 Euratsfeld (AT)
(72) Erfinder: KNAPP, Friedrich, 4362 Bad Kreuzen (AT)
(74) Vertreter: Weiser & Voith Patentanwälte Partnerschaft

(57) **Zusammenfassung**

Ein Beschlag (1) für einen Bauteil (2) umfasst eine erste Platte (3) mit einer ersten Öffnung (9) und zumindest zwei über den Umfang der ersten Öffnung (9) verteilten Federzungen (13), welche jeweils radial in die erste Öffnung (9) hineinragen und an der einen Seite (10) der ersten Platte (3) in spitzem Winkel (α) aus der Plattenebene (ε) herausragen, wobei zwischen ihren freien Enden (15) eine lichte Weite (W) verbleibt, eine an die andere Seite (11) der ersten Platte (3) anlegbare zweite Platte (4) mit einer sie durchsetzenden zweiten Öffnung (16), welche in der Anlagestellung mit der ersten Öffnung (9) fluchtet, wobei zumindest eine der Platten (3, 4) am Bauteil (2) fest verankerbar ist, einen durch die Öffnungen (9, 16) hindurchführbaren Gewindebolzen (5), dessen Durchmesser (D) die lichte Weite (W) übertrifft, und eine auf den Gewindebolzen (5) aufschraubbare, gegen die der ersten Platte (3) abgewandte Seite (18) der zweiten Platte (4) festziehbare Mutter (6).

## Beschreibung

Die vorliegende Erfindung betrifft einen Beschlag für einen Bauteil, insbesondere Holzbauteil. Ferner betrifft die vorliegende Erfindung ein System, welches den Beschlag und den Bauteil umfasst.

Ein solcher Beschlag kann sowohl zum Abstützen eines Bauteils am Boden oder an einer Tragstruktur als auch zum Verbinden eines Bauteils mit einem weiteren Bauteil wie einem Träger, einem Pfosten, einer Wand od.dgl. verwendet werden. Für diese diversen Anwendungsmöglichkeiten ist eine Mannigfaltigkeit verschiedener Beschläge im Stand der Technik bekannt. Beispielsweise beschreibt die Schrift EP 3 009 583 A1 einen als Stützfuß für einen Pfosten verwendbaren Beschlag mit einer an der Unterseite des Pfostens montierbaren Platte mit einer Gewindehülse, in die ein am Boden abstützbarer Gewindebolzen höhenverstellbar eingeschraubt ist. Die Montage dieses Beschlags am Pfosten ist mühsam und arbeitsaufwändig, was ein schnelles Aufstellen des Pfostens erschwert. Darüberhinaus können sich der bereits montierte Beschlag und der Pfosten leicht gegeneinander verdrehen, weshalb der Pfosten nur ungenau und temporär ausgerichtet werden kann.

Die Erfindung setzt sich um Ziel, einen verbesserten Beschlag bereitzustellen, welcher schnell am Bauteil montiert werden kann und eine genaue Ausrichtung und stabile Verankerung des Beschlags am Bauteil ermöglicht.

Dieses Ziel wird mit einem Beschlag der einleitend genannten Art erreicht, der sich erfindungsgemäß auszeichnet durch:
eine erste Platte mit einer sie durchsetzenden ersten Öffnung und zumindest zwei über den Umfang der ersten Öffnung verteilten Federzungen, welche jeweils radial in die erste Öffnung hineinragen und an der einen Seite der ersten Platte in spitzem Winkel aus der Plattenebene herausragen, wobei zwischen ihren freien Enden eine lichte Weite verbleibt,
eine an die andere Seite der ersten Platte anlegbare zweiten Platte mit einer sie durchsetzenden zweiten Öffnung, welche in der Anlagestellung mit der ersten Öffnung fluchtet, wobei zumindest eine der Platten am Bauteil fest verankerbar ist,
einen mit seinem einen Ende durch die fluchtenden Öffnungen hindurchführbaren Gewindebolzen, dessen Durchmesser die lichte Weite der ersten Öffnung übertrifft, so dass er ratschenartig an den Federzungen verrasten kann, wobei das andere Ende des Gewindebolzens am Boden abstützbar oder mit einem weiteren Bauteil verbindbar ist, und
eine auf den Gewindebolzen aufschraubbare, gegen die der ersten Platte abgewandte Seite der zweiten Platte festziehbare Mutter.

Der erfindungsgemäße Beschlag lässt sich besonders schnell am Bauteil montieren. Dazu wird zunächst die erste bzw. zweite Platte am Bauteil verankert; dann wird der Gewindebolzen in einer linearen Relativbewegung zwischen Gewindebolzen und Bauteil durch die fluchtenden Öffnungen der beiden Platten so weit wie nötig hindurchgeführt, wobei seine Gewindegänge ratschenartig über die Enden der Federzungen hinwegreiten und schließlich daran verrasten; und dann wird die Mutter gegen die zweite Platte festgezogen, um einerseits die am Gewindebolzen verrasteten Federzungen gegen den Gewindebolzen und anderseits die beiden Platten gegeneinander zu verspannen. Ebenso könnten selbstverständlich auch zuerst die Platten - noch gesondert vom Bauteil - durch Festziehen der Mutter am Gewindebolzen verspannt werden, und dann erst eine der Platten am Bauteil verankert werden.

In der verspannten Stellung ist der Gewindebolzen an den freien Enden der Federzungen stabil arretiert. So kann der Gewindebolzen nicht herausgezogen werden, da eine Zugkraft über die Federzungen und ihre spitzen Winkel eine Radialkraft nach außen auf die erste Platte bewirkt, welche die erste Platte aufnimmt und der Radialkraft damit widersteht. Außerdem kann der Gewindebolzen nicht verdreht werden, da die verspannten Federzungen und damit die erste Platte ein auf den Gewindebolzen wirkendes Drehmoment aufnehmen.

Vor dem Festziehen der Mutter kann der Beschlag noch genau mit dem Bauteil ausgerichtet werden und wird erst durch das Festziehen der Mutter in seiner ausgerichteten Position arretiert. Wenn der Beschlag z.B. mit einem weiteren Bauteil verbunden werden soll, können die beiden Bauteile genau aneinander ausgerichtet und dann beständig verbunden werden.

Nicht zuletzt ermöglicht der erfindungsgemäße Beschlag eine reversible Montage am Bauteil. Falls erforderlich, kann die verspannte Stellung nämlich einfach durch Lockern der Mutter verlassen und der Gewindebolzen gegenüber der ersten Platte verdreht und so von den Federzungen freigeschraubt werden.

Bei dem Beschlag der Erfindung können nur die erste Platte, nur die zweite Platte oder beide Platten am Bauteil verankert werden, z.B. daran geklebt, geschweißt, angebördelt, genagelt etc., oder in diesen mit Formschluss eingreifen. Zur Verankerung der zweiten Platte am Bauteil ist es besonders vorteilhaft, wenn die zweite Platte zwei oder mehr um die zweite Öffnung verteilte Befestigungsbohrungen hat. Dadurch kann die zweite Platte über die Befestigungsbohrungen durchsetzende Schrauben einfach und schnell mit dem Bauteil verschraubt werden. Ebenso ist es vorteilhaft, wenn zur Verankerung der ersten Platte diese zwei oder mehr um die erste Öffnung verteilte Befestigungsbohrungen hat, um diese mit dem Bauteil verschrauben zu können.

Optional können auch beide Platten Befestigungsbohrungen haben. In einer bevorzugten Ausführungsform fluchten die Befestigungsbohrungen der ersten und der zweiten Platte in der Anlagestellung. Dadurch können die erste Platte und die zweite Platte gemeinsam über die Befestigungsbohrungen durchsetzende Schrauben besonders stabil am Bauteil verankert werden.

Es ist günstig, wenn das freie Ende jeder Federzunge einen mit dem Gewindebolzen korrespondierenden zwei- oder mehrgängigen Gewindeabschnitt hat. Die mit dem Gewindebolzen korrespondierenden zwei- oder mehrgängigen Gewindeabschnitte bewirken eine besonders gute Kraftübertragung vom Gewindebolzen auf die Federzungen. Infolgedessen kann eine besonders hohe Kraft auf den die erste Öffnung umgebenden Teil der ersten Platte übertragen und von diesem zuverlässig aufgenommen werden.

In einer vorteilhaften Ausführungsform beträgt der genannte spitze Winkel zwischen 5° und 60°, bevorzugt zwischen 10° und 30°, gegenüber der Plattenebene der ersten Platte. Dadurch kann der Gewindebolzen in der einen Richtung besonders einfach in seine verrastete Stellung gebracht und darin besonders sicher gegen ein Verdrehen oder Verrutschen arretiert werden.

Die erste Platte kann prinzipiell zwei oder mehr Federzungen aufweisen, welche beliebig um den Umfang der ersten Öffnung verteilt sein können. Vorteilhafterweise hat die erste Platte drei oder vier Federzungen, welche gleichmäßig über den Umfang der ersten Öffnung verteilt sind. Eine derartige Anzahl und Anordnung der Federzungen ist leicht herzustellen und ermöglicht eine besonders gleichmäßige Kraftverteilung vom Gewindebolzen auf die erste Platte und umgekehrt.

Damit der Beschlag möglichst klein bauen und die zweite Platte über einen großen Bereich an der ersten Platte anliegen kann, ist es zweckmäßig, wenn die erste Platte und die zweite Platte in der Anlagestellung im Wesentlichen kongruent sind. Die Plattenkongruenz erlaubt es außerdem, eine mit der Plattenform korrespondierende Ausnehmung im Bauteil vorzusehen, sodass beide Platten einfach in der Ausnehmung aufgenommen werden können. Insbesondere ist es günstig, wenn die erste und die zweite Platte in ihrer jeweiligen Plattenebene kreisförmig, quadratisch oder regelmäßig polygonal sind, um gleich mehrere rotationssymmetrische Passlagen für die kongruenten Platten bereitzustellen, sodass diese möglichst fehlertolerant montiert und schnell und einfach in der Anlagestellung zur Deckung gebracht werden können.

Die beiden Platten können aus beliebigem Material sein, z.B. aus Metall, Kunststoff, insbesondere faserverstärktem Kunststoff, Holz, etc. In einer bevorzugten Ausführungsform ist die erste Platte aus Metall, bevorzugt aus Federstahl. Die erste Platte ist dann besonders kräftig und kann optional einstückig mit ihren Federzungen gefertigt werden. In einer weiteren bevorzugten Ausführungsform ist die zweite Platte aus Metall, bevorzugt aus Stahl, gefertigt, um eine hohe Festigkeit zu erzielen.

Um den Beschlag möglichst leicht zu halten, kann die zweite Platte zur Gewichtsreduktion mehrfach durchbrochen sein. Oder es kann die zweite Platte - bei gleichem Gesamtgewicht - an den nicht durchbrochenen Stellen dicker ausgeführt sein, um deren Stabilität zu verbessern.

In einer günstigen Ausführungsform kann der Beschlag ferner eine zwischen der Mutter und der zweiten Platte anordenbare Beilagscheibe umfassen. Über die Beilagscheibe kann die Anpresskraft der festgezogenen Mutter über die zweite Platte verteilt und somit eine besonders starke Verspannung zwischen der ersten und der zweiten Platte einerseits und dem Gewindebolzen und der ersten Platte andererseits erreicht werden.

In einer weiteren günstigen Ausführungsform kann der Beschlag eine zwischen der ersten Platte und der zweiten Platte oder an der genannten einen Seite der ersten Platte anordenbare Platte aus elastischem Material umfassen, die eine sie durchsetzenden dritte Öffnung hat, welche in der Anlagestellung mit der ersten und der zweiten Öffnung fluchtet. Eine derartige Platte kann die jeweils daran anliegenden Elemente gegeneinander elastisch verspannen, um auftretende Lastspitzen zu dämpfen und Fertigungstoleranzen zu kompensieren. Ferner können die daran anliegenden Elemente dadurch elektrisch, thermisch und/oder fluiddicht, z.B. um einen Flüssigkeitseintritt in einen HolzBauteil über den Beschlag zu hemmen, voneinander isoliert werden.

In einem weiteren Aspekt schafft die Erfindung ein System, das einen Beschlag wie hierin beschrieben und einen Bauteil, insbesondere Holzbauteil, umfasst. Bevorzugt hat dabei der Bauteil eine Ausnehmung zur Aufnahme der Federzungen und des durch die fluchtenden Öffnungen hindurchgeführten Endes des Gewindebolzens. Dadurch können die Federzungen und das Gewindebolzenende platzsparend im Bauteil aufgenommen und so auch vor Witterung geschützt werden. Besonders bevorzugt weist die Ausnehmung einen Innenabsatz zur Anlage des rund um die Federzungen liegenden Umfangsbereichs der genannten einen Seite der ersten Platte auf. Die erste Platte des Beschlags kann am Innenabsatz genau mit dem Bauteil ausgerichtet und gegebenenfalls am Innenabsatz anliegend besonders stabil am Bauteil verankert werden.

Die Erfindung wird nachfolgend anhand von in den beigeschlossenen Zeichnungen dargestellten Beispielen näher erläutert. In den Zeichnungen zeigen:
Fig. 1 einen erfindungsgemäßen Beschlag, welcher an einem Pfosten verankert ist, in einer Seitenansicht;
Fig. 2 den am Pfosten verankerten Beschlag von Fig. 1 im Schnitt entlang der Schnittlinie A-A von Fig. 1;
Fig. 3 den Beschlag und Pfosten der Fig. 1 und 2 in einer perspektivischen Explosionsansicht;
die Fig. 4 und 5 eine Variante der ersten Platte des Beschlags der Fig. 1 - 3 in einer Perspektivansicht von oben mit hindurchgeführtem Gewindebolzen (Fig. 4) bzw. einer Seitenansicht (Fig. 5);
die Fig. 6 und 7 eine weitere Variante der ersten Platte des Beschlags der Fig. 1 - 3 in einer Perspektivansicht von oben mit hindurchgeführtem Gewindebolzen (Fig. 6) bzw. einer Seitenansicht (Fig. 7);
Fig. 8 eine Variante der zweiten Platte des Beschlags der Fig. 1 - 3 in einer Perspektivansicht von oben; und
Fig. 9 eine weitere Ausführungsform des Beschlags und Pfostens der Erfindung in einer perspektivischen Explosionsansicht.

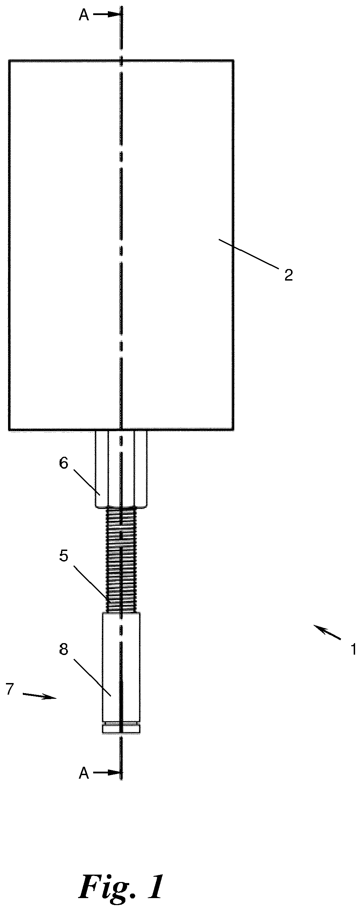

In den Fig. 1 - 3 ist ein Beschlag 1 gezeigt, welcher an einem Bauteil (hier: an einem Pfosten) 2 verankert werden kann. Der Beschlag 1 umfasst eine erste und eine zweite Platte 3, 4, von denen zumindest eine am Bauteil 2 fest verankerbar ist, einen Gewindebolzen 5 und eine auf den Gewindebolzen 5 aufschraubbare Mutter 6.

Der Beschlag 1 kann zu vielen Anwendungszwecken an unterschiedlichsten Bauteilen 2 verankert werden. Im gezeigten Beispiel fungiert der Beschlag 1 als "Stützenfuß", um den Bauteil 2 an einem unteren Ende 7 des Gewindebolzens 5 abzustützen, z.B. am Boden oder auf einer Tragstruktur. Dazu kann das untere Ende 7 beispielsweise im Boden einbetoniert, in einem Dübel 8, in einer Gewindebuchse eines Staffels oder einer Schwelle, usw. aufgenommen oder als Teller ausgeführt sein. In einem weiteren Beispiel fungiert der Beschlag 1 als "Verbinder", um den einen Bauteil 2 über den Gewindebolzen 5, z.B. über dessen unteres Ende 7, mit einem weiteren Bauteil 2 (nicht gezeigt) zu verbinden. Der bzw. die Bauteile 2 können beliebige Formen haben und aus beliebigem Material sein, insbesondere aus Holz, oder aus Metall, Beton, Kunststoff, Verbundstoff, Ziegel etc.

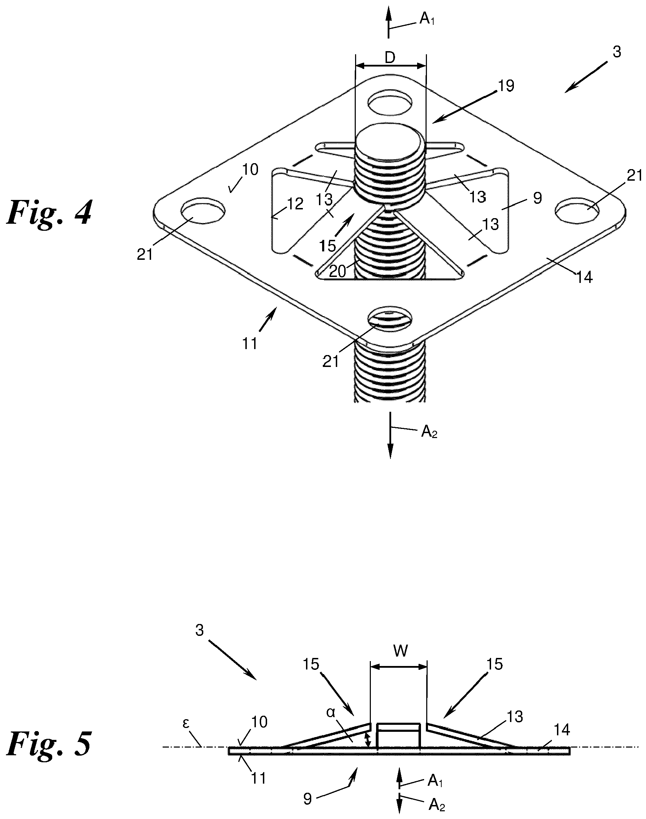

Gemäß den Fig. 4 bis 7 hat die erste Platte 3 eine - insbesondere mittige - erste Öffnung 9, welche die erste Platte 3 von ihrer Oberseite 10 zu ihrer Unterseite 11 durchsetzt. In der ersten Öffnung 9 hat die erste Platte 3 zumindest zwei über den Umfang 12 der ersten Öffnung 9 verteilte Federzungen 13 (hier: vier über den Umfang 12 gleichmäßig verteilte Federzungen 13). Die Federzungen 13 ragen jeweils radial in die erste Öffnung 9 hinein und zugleich an der Oberseite 10 der ersten Platte 3 in spitzem Winkel α aus der Plattenebene ε heraus, genauer aus dem rund um die Federzungen 13 liegenden Umfangsbereich 14 der ersten Platte 3.

Die erste Öffnung 9 muss (wie im dargestellten Beispiel) nicht kreisrund sein; die genannten radialen Ausrichtungen der Federzungen 13 bezeichnen in jedem Fall (Radial-)Richtungen der jeweiligen Federzungen 13 von ihrer Wurzel am Umfang 12 der ersten Öffnung 9 in das Innere der ersten Öffnung 9.

Das dem Umfang 12 der ersten Öffnung 9 jeweils abgewandte Ende 15 jeder Federzunge 13 ist frei. Zwischen den freien Enden 15 der Federzungen 13 verbleibt dabei eine lichte Weite W. Damit korrespondierend hat der Gewindebolzen 5 einen Durchmesser D, d.h. einen Gewinde-Außen- bzw. -Nenndurchmesser, der die zwischen den freien Enden 15 der Federzungen 13 verbleibende lichte Weite W übertrifft.

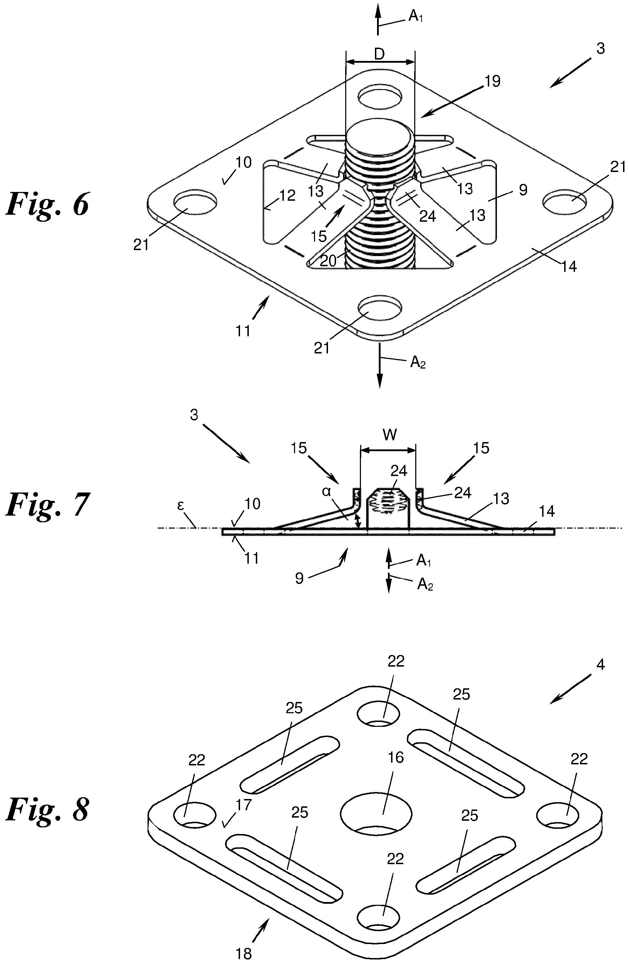

Ebenso hat die zweite Platte 4, wie in Fig. 8 dargestellt, eine - insbesondere mittige - zweite Öffnung 16, welche die zweite Platte 4 von ihrer Oberseite 17 zu ihrer Unterseite 18 durchsetzt. In einer Anlagestellung, in welcher die Oberseite 17 der zweiten Platte 4 an der Unterseite 10 der ersten Platte 3 anliegt, fluchten die erste und die zweite Öffnung 9, 16, sodass der Gewindebolzen 5 mit seinem oberen Ende 19 durch die Öffnungen 9, 16 hindurchgeführt werden kann. Hiefür kann die zweite Öffnung 16 den Gewindebolzen 5 entweder mit Spiel aufnehmen oder, alternativ dazu, ein Innengewinde (nicht gezeigt) aufweisen, sodass der Gewindebolzen 5 durch Einschrauben hindurchgeführt werden kann.

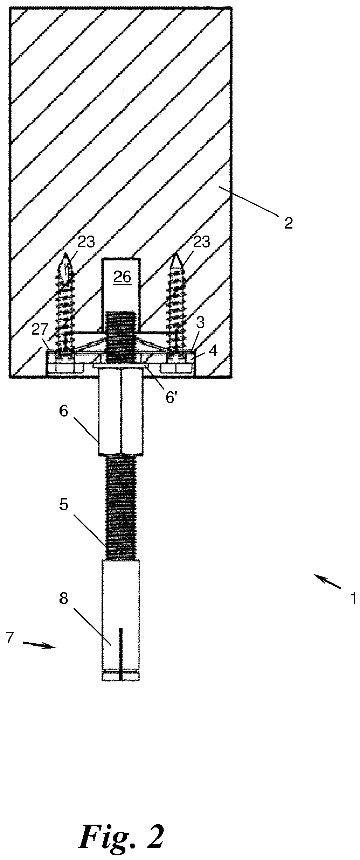

Wird das obere Ende 19 des Gewindebolzens 5, wie in den Fig. 2, 4 und 6 dargestellt, durch die Öffnungen 9, 16 hindurchgeführt, greifen die freien Enden 15 der Federzungen 13 in das Gewinde 20 des Gewindebolzens 5 ein, d.h. der Gewindebolzen 5 verrastet infolge seines gegenüber der lichten Weite W größeren Durchmessers D ratschenartig an den Federzungen 13: Aufgrund der federnden Wirkung der Federzungen 13 und ihres mit der Plattenebene ε eingeschlossenen spitzen Winkels α kann der Gewindebolzen 5 in einer Normalrichtung A₁ auf die Plattenebene ε, nämlich von der Unter- zur Oberseite 11, 10 (in den Fig. 4 und 6: nach oben), einfach weiter in die Öffnungen 9, 16 eingeführt bzw. eingedrückt werden. Die Federzungen 13 werden dabei jeweils an ihren freien Enden 15 vom Gewinde 20 des Gewindebolzens 5 nach oben verdrängt und nach außen aufgezwängt, indem die spitzen Winkel α vorübergehend geringfügig gegen die Federwirkung vergrößert werden, um darauf im jeweils nächstfolgenden Gewindegang des Gewindebolzens 5 wieder einzugreifen. In die der genannten einen Normalrichtung A₁ entgegengesetzte andere Normalrichtung A₂ auf die Plattenebene ε ist der Gewindebolzen 5 hingegen verrastet bzw. arretiert, da er den spitzen Winkel α der Federzungen 13 gegenüber der Plattenebene ε nicht verkleinern kann: er müsste dazu über die Federzungen 13 den um die erste Öffnung 9 verbleibenden Umfangsbereich 14 der ersten Platte 3 aufzwängen, was durch geeignete Gestaltung der ersten Platte 3 verhindert werden kann.

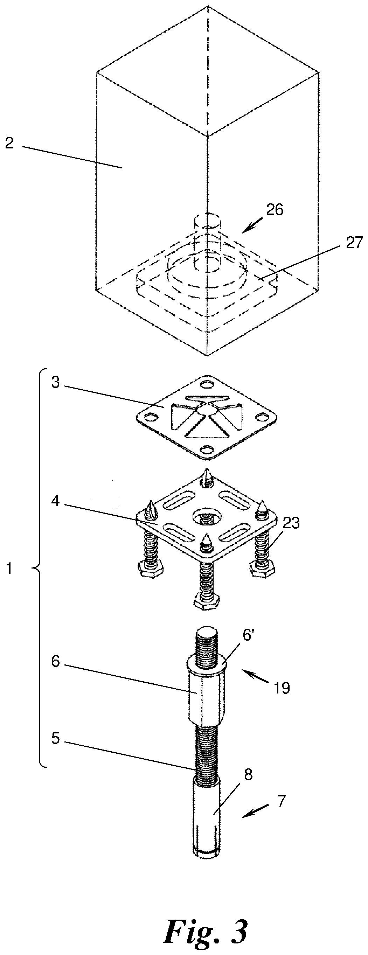

Nachdem der Gewindebolzen 5 in gewünschter Länge, z.B. in einem gewünschten Abstand zum Boden oder zu einem weiteren Bauteil, durch die Öffnungen 9, 16 hindurchgeführt ist, kann die Mutter 6 gegen die der ersten Platte 3 abgewandte Unterseite 18 der zweiten Platte 4 festgezogen werden. Dadurch wird einerseits der Gewindebolzen 5 durch die eben beschriebene Arretierungswirkung in der anderen Normalrichtung A₂ gegen die freien Enden 15 der Federzungen 13 verspreizt bzw. verspannt und andererseits die zweite Platte 4 an die erste Platte 3 gepresst. Infolgedessen befindet sich der Beschlag 1 in einer verspannten Stellung, welche durch Lockern der Mutter 6 wahlweise wieder verlassen werden kann, z.B. um den Beschlag an einem anderen Bauteil 2 zu verankern. Um beim Festziehen der Mutter deren Anpresskraft gegen die zweite Platte 4 zu verteilen, kann optional eine Beilagscheibe 6' (Fig. 2 und 3) zwischen der Mutter 6 und der zweiten Platte 4 angeordnet werden.

Die Verankerung einer einzelnen der Platten 3 bzw. 4 oder beider Platten 3 und 4 am Bauteil 2 kann auf vielerlei Weise erfolgen, sei es durch Kraft-, Form- oder Stoffschluss und - je nach Anwendung - entweder vor dem Hindurchführen des Gewindebolzens 5 oder danach. Wie in den Fig. 2 - 8 gezeigt können beispielsweise die erste und die zweite Platte 3, 4 jeweils zwei oder mehr (hier: vier) um die jeweilige Öffnung 9, 16 verteilte Befestigungsbohrungen 21, 22 haben, welche in der Anlagestellung der Platten 3, 4 fluchten, z.B. für Befestigungsschrauben 23 zum Verschrauben mit dem Bauteil 2. Alternativ dazu könnte nur die zweite Platte 4 Befestigungsbohrungen 22 aufweisen, z.B. an einem in der Anlagestellung der Platten 3, 4 über die erste Platte 3 vorragenden Bereich der zweiten Platte 4 (nicht gezeigt). In einer weiteren Alternative könnte nur die erste Platte 3 Befestigungsbohrungen 21 aufweisen und die zweite Platte 4 dann z.B. nur durch den Anpressdruck der Mutter 6 gehalten werden.

Die freien Enden 15 der Federzungen 13 können in einer Variante nur in einen einzigen Gewindegang des Gewindes 20 eingreifen (Fig. 2, 4 und 5) oder, alternativ dazu, in mehrere Gewindegänge gleichzeitig. Z.B. zeigen die Fig. 6 und 7 eine optionale Variante, in welcher das freie Ende 15 jeder Federzunge 13 einen mit dem Gewindebolzen 5 korrespondierenden zwei- oder mehrgängigen Gewindeabschnitt 24 hat, sodass der Gewindebolzen 5 mit seinem Gewinde 20 in den Gewindeabschnitten 24 der freien Enden 15 der Federzungen 13 verrasten kann.

Es versteht sich, dass die erste Platte 3 anstelle der dargestellten vier beispielsweise nur zwei oder drei oder aber fünf oder mehr Federzungen 13 haben könnte, welche z.B. einstückig mit der Platte 3 geformt oder damit verschweißt, verklebt, verklemmt usw. sein können. Dabei können die Federzungen 13 wie dargestellt über den Umfang der ersten Öffnung 9 gleichmäßig verteilt sein, sodass in Draufsicht alle Winkel zwischen jeweils zwei benachbarten Federzungen 13 immer gleich sind, oder ungleichmäßig verteilt sein. Auch könnten z.B. eine einzelne Federzunge 13 von einer Umfangsseite der ersten Öffnung 9 und zwei einander nahe benachbarte weitere Federzungen 13 von der gegenüberliegenden anderen Umfangsseite der ersten Öffnung 9 in diese radial hineinragen; in Draufsicht ergibt dies optional eine Spiegelsymmetrie.

Der genannte spitze Winkel α beträgt in den dargestellten Beispielen etwa 15° gegenüber der Plattenebene ε in der ersten Öffnung 9. Allgemein beträgt der genannte spitze Winkel α zwischen 5° und 60°, wird jedoch meist zwischen 10° und 30° liegen. Selbstverständlich kann der spitze Winkel α im entspannten Zustand der Federzungen 13, d.h. ohne zwischen den freien Enden 13 verrasteten Gewindebolzen 5 (Fig. 5 und 7), einen anderen Wert einnehmen als in dem Fall, dass der Gewindebolzen 3 seine verrastete Stellung einnimmt (Fig. 2, 4 und 6).

Die beiden Platten 3, 4 können eine beliebige Form haben. In den gezeigten Beispielen sind die beiden Platten 3, 4 in ihrer jeweiligen Plattenebene im Wesentlichen quadratisch und von gleicher Ausdehnung, sodass sie in gleich vier drehsymmetrischen Stellungen in der Anlagestellung kongruent aneinander anliegen können (Fig. 2). In weiteren drehsymmetrischen Varianten könnten die beiden Platten 3, 4 beispielsweise kreisförmig oder regelmäßig polygonal sein. Selbstverständlich können die Platten 3, 4 in weiteren Varianten asymmetrische Formen haben und/oder nicht zur Deckung gebracht werden.

Ebenso können die beiden Platten 3, 4 aus beliebigem Material sein, z.B. aus Metall, aus Kunststoff, insbesondere faserverstärktem Kunststoff, aus Holz oder einem anderen Werkstoff. Insbesondere können die erste Platte 3 und die zweite Platte 4 aus verschiedenen Werkstoffen sein. Z.B. kann die erste Platte 3 aus Federstahl sein und/oder die zweite Platte 4 aus Metall, insbesondere aus Stahl.

Wie in den Fig. 2 und 8 dargestellt kann die zweite Platte 4 optional mehrere Durchbrechungen 25 zur Gewichtsreduktion haben. Die Durchbrechungen 25 können beispielsweise an Positionen niedriger mechanischer Belastung angeordnet sein, z.B. zwischen den Befestigungsbohrungen 22 der zweiten Platte 4.

Die Form des Bauteils 2 kann optional an jene des Beschlags 1 angepasst sein. In der in den Fig. 2 und 3 dargestellten Ausführungsform hat der Bauteil 2 eine Ausnehmung 26 zur Aufnahme der Federzungen 13 und des oberen Endes 19 des Gewindebolzens 5, wenn dieses durch die fluchtenden Öffnungen 9, 16 hindurchgeführt ist. In der gezeigten Variante dieser Ausführungsform hat die Ausnehmung 26 ferner einen Innenabsatz 27, an dem der rund um die Federzungen 13 liegende Umfangsbereich 14 der Oberseite der ersten Platte 3 anliegen kann. Durch seine mit der Form der ersten Platte 3 korrespondierende Form richtet der Innenabsatz 27 die erste Platte 3 und damit den Beschlag 1 am Bauteil 2 aus.

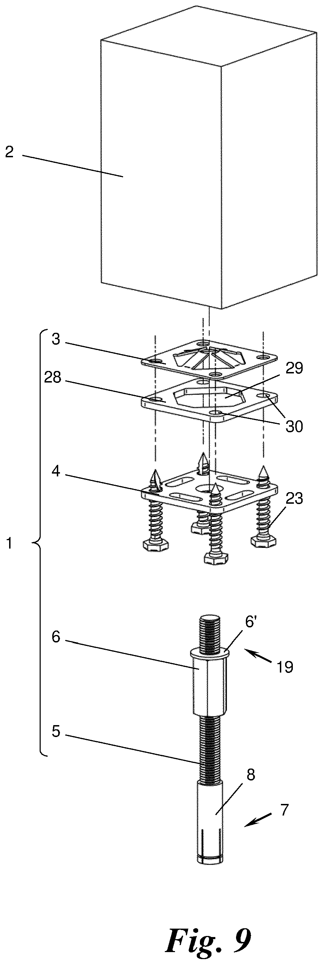

Wie in Fig. 9 gezeigt, kann der Beschlag 1 optional eine elastische Platte 28 aufweisen, welche zum Hindurchführen des Bolzens 5 eine sie durchsetzende dritte Öffnung 29 hat, die in der Anlagestellung mit den ersten und zweiten Öffnungen 9, 16 fluchtet. Die elastische Platte 28 kann zwischen der ersten Platte 3 und der zweiten Platte 4 angeordnet sein (Fig. 9) und/oder zwischen der ersten Platte 3 und dem Bauteil 2, also an der Oberseite 11 der ersten Platte 3 (nicht gezeigt), um die jeweils daran anliegenden Elemente gegeneinander elastisch zu verspannen und/oder voneinander elektrisch, thermisch und/oder fluiddicht voneinander zu isolieren. Die elastische Platte 28 kann dazu aus einer Vielzahl von elastischen Materialien gefertigt sein, z.B. aus natürlichem und/oder synthetischem Gummi, insbesondere aus einem Elastomer.

Die elastische Platte 28 kann sich über einen kleinen Bereich um die dritte Öffnung 29 herum erstrecken und die Befestigungsbohrungen 21, 22, falls vorhanden, freilassen (nicht gezeigt) oder sich wie gezeigt über die Befestigungsbohrungen 21, 22 hinweg erstrecken. In letzterem Fall kann die elastische Platte 28 entweder Öffnungen 30 für den Durchtritt der Befestigungsschrauben 23 haben oder die Befestigungsbohrungen 21, 22 bedecken, sodass sich die Befestigungsschrauben 23 beim Einschrauben durch die elastische Platte 28 schneiden.Es versteht sich, dass die Richtungen "oben" (Oberseite, oberes Ende) und "unten" (Unterseite, unteres Ende) hier nur aus Gründen der Deutlichkeit verwendet wurden, jedoch nicht notwendigerweise mit einer Richtung der Erdbeschleunigung übereinstimmen müssen.

Die Erfindung ist nicht auf die dargestellten und beschriebenen Ausführungsbeispiele beschränkt, sondern umfasst all jene Varianten, Modifikationen und deren Kombinationen, die in den Rahmen der angeschlossenen Ansprüche fallen.

## Patentansprüche

1. Beschlag für einen Bauteil, insbesondere Holzbauteil, **gekennzeichnet durch**
eine erste Platte (3) mit einer sie durchsetzenden ersten Öffnung (9) und zumindest zwei über den Umfang (12) der ersten Öffnung (9) verteilten Federzungen (13), welche jeweils radial in die erste Öffnung (9) hineinragen und an der einen Seite (10) der ersten Platte (3) in spitzem Winkel (α) aus der Plattenebene (ε) herausragen, wobei zwischen ihren freien Enden (15) eine lichte Weite (W) verbleibt,
eine an die andere Seite (11) der ersten Platte (3) anlegbare zweite Platte (4) mit einer sie durchsetzenden zweiten Öffnung (16), welche in der Anlagestellung mit der ersten Öffnung (9) fluchtet, wobei zumindest eine der Platten (3, 4) am Bauteil (2) fest verankerbar ist,
einen mit seinem einen Ende (19) durch die fluchtenden Öffnungen (9, 16) hindurchführbaren Gewindebolzen (5), dessen Durchmesser (D) die lichte Weite (W) der ersten Öffnung (9) übertrifft, so dass er ratschenartig an den Federzungen (13) verrasten kann, wobei das andere Ende (7) des Gewindebolzens (5) am Boden abstützbar oder mit einem weiteren Bauteil verbindbar ist, und
eine auf den Gewindebolzen (5) aufschraubbare, gegen die der ersten Platte (3) abgewandte Seite (18) der zweiten Platte (4) festziehbare Mutter (6).

2. Beschlag nach Anspruch 1, **dadurch gekennzeichnet, dass** die zweite Platte (4) zwei oder mehr um die zweite Öffnung (16) verteilte Befestigungsbohrungen (22) hat.

3. Beschlag nach Anspruch 1 oder 2, **dadurch gekennzeichnet, dass** die erste Platte (3) zwei oder mehr um die erste Öffnung (9) verteilte Befestigungsbohrungen (21) hat.

4. Beschlag nach den Ansprüchen 2 und 3, **dadurch gekennzeichnet, dass** die Befestigungsbohrungen (21, 22) der ersten und der zweiten Platte (3, 4) in der Anlagestellung fluchten.

5. Beschlag nach einem der Ansprüche 1 bis 4, **dadurch gekennzeichnet, dass** das freie Ende (15) jeder Federzunge (13) einen mit dem Gewindebolzen (5) korrespondierenden zwei- oder mehrgängigen Gewindeabschnitt (24) hat.

6. Beschlag nach einem der Ansprüche 1 bis 5, **dadurch gekennzeichnet, dass** der genannte spitze Winkel (α) zwischen 5° und 60°, bevorzugt zwischen 10° und 30°, gegenüber der Plattenebene (ε) der ersten Platte (3) beträgt.

7. Beschlag nach einem der Ansprüche 1 bis 6, **dadurch gekennzeichnet, dass** die erste Platte (3) drei oder vier Federzungen (13) hat, welche gleichmäßig über den Umfang (12) der ersten Öffnung (9) verteilt sind.

8. Beschlag nach einem der Ansprüche 1 bis 7, **dadurch gekennzeichnet, dass** die erste Platte (3) und die zweite Platte (4) in der Anlagestellung im Wesentlichen kongruent sind.

9. Beschlag nach Anspruch 8, **dadurch gekennzeichnet, dass** die erste und die zweite Platte (3, 4) in ihrer jeweiligen Plattenebene (ε) kreisförmig, quadratisch oder regelmäßig polygonal sind.

10. Beschlag nach einem der Ansprüche 1 bis 9, **dadurch gekennzeichnet, dass** die erste Platte (3) aus Federstahl gefertigt ist.

11. Beschlag nach einem der Ansprüche 1 bis 10, **dadurch gekennzeichnet, dass** die zweite Platte (4) aus Metall, bevorzugt aus Stahl, gefertigt ist.

12. Beschlag nach einem der Ansprüche 1 bis 11, **dadurch gekennzeichnet, dass** die zweite Platte (4) zur Gewichtsreduktion mehrfach durchbrochen ist.

13. Beschlag nach einem der Ansprüche 1 bis 12, **dadurch gekennzeichnet, dass** er eine zwischen der Mutter (6) und der zweiten Platte (4) anordenbare Beilagscheibe (6') umfasst.

14. Beschlag nach einem der Ansprüche 1 bis 13, **dadurch gekennzeichnet, dass** er eine zwischen der ersten Platte (3) und der zweiten Platte (4) oder an der genannten einen Seite (10) der ersten Platte (3) anordenbare Platte (28) aus elastischem Material umfasst, die eine sie durchsetzende dritte Öffnung (29) hat, welche in der Anlagestellung mit der ersten und der zweiten Öffnung (9, 16) fluchtet.

15. System umfassend einen Beschlag (1) nach einem der Ansprüche 1 bis 14 und einen Bauteil (2), insbesondere Holzbauteil, wobei der Bauteil (2) eine Ausnehmung (26) zur Aufnahme der Federzungen (13) und des durch die fluchtenden Öffnungen (9, 16) hindurchgeführten Endes (19) des Gewindebolzens (5) hat.

16. System nach Anspruch 15, **dadurch gekennzeichnet, dass** die Ausnehmung (26) einen Innenabsatz (27) zur Anlage des rund um die Federzungen (13) liegenden Umfangsbereichs (14) der genannten einen Seite (10) der ersten Platte (3) aufweist.
